# EUROPÄISCHE PATENTSCHRIFT

(11) **EP 1 266 099 B1**
(45) Veröffentlichungstag und Bekanntmachung des Hinweises auf die Patenterteilung: **08.10.2003**
(21) Anmeldenummer: 01921212.5
(22) Anmeldetag: 16.03.2001
(51) Int. Cl.: E03F 7/12, F16L 55/48

(54) **VERFAHREN ZUM WIEDERAUFFINDEN VON VORGEBBAREN STELLEN IN KANAL- UND ROHRLEITUNGSSYSTEMEN**
METHOD FOR RETRIEVING PREDETERMINED LOCATIONS IN SEWER AND PIPELINE SYSTEMS
PROCEDE PERMETTANT DE RETROUVER DES EMPLACEMENTS PREDEFINIS DANS DES SYSTEMES DE CONDUITES D'EGOUT ET DE CANALISATIONS

(30) Priorität: 24.03.2000 DE 10014703
(43) Veröffentlichungstag der Anmeldung: 18.12.2002
(73) Patentinhaber: FRAUNHOFER-GESELLSCHAFT ZUR FÖRDERUNG DER ANGEWANDTEN FORSCHUNG E.V., 80636 München (DE)
(72) Erfinder: MUNSER, Roland, 76199 Karlsruhe (DE); KUNTZE, Helge-Björn, 76297 Stutensee (DE); HARTRUMPF, Matthias, 76187 Karlsruhe (DE)
(74) Vertreter: Gagel, Roland, Dr.
(86) Internationale Anmeldenummer: DE0101039
(87) Internationale Veröffentlichungsnummer: WO01073232

(56) Entgegenhaltungen:
- DE-A- 19 521 895
- DE-A- 19 600 085

## Beschreibung

### Technisches Gebiet

Die Erfindung betrifft ein Verfahren zum Wiederauffinden von vorgebbaren Stellen in Kanal- und Rohrleitungssystemen nach dem Aufbringen oder Ablagern einer Materialschicht, bei dem ein Trägerfahrzeug mit einem Mikrowellensensor eingesetzt wird, der Mikrowellensignale aussendet und rückgestreute Mikrowellensignale empfängt. Das erfindungsgemäße Verfahren eignet sich in besonderer Weise für einen Einsatz auf dem Gebiet der intelligenten TV- und sensorbasierten Kanal- bzw. Rohrinspektion und -sanierung.

### Stand der Technik

Bei der Sanierung von Kanal- und Rohrleitungssystemen, wie beispielsweise Abwasserrohren in öffentlichen und kommunalen Rohrleitungsnetzen, werden häufig zusätzliche so genannte Inliner-Rohre aus Kunststoffmaterial in die zu sanierenden Rohrabschnitte eingesetzt. Beim Einziehen dieser neuen Inliner-Rohre zur Sanierung der defekten Kanalrohrabschnitte werden jedoch alle einmündenden Hausanschlüsse verdeckt. In einem nachfolgenden Arbeitsgang muss dann ein Kanalroboter mit Hilfe eines manipulierbaren Fräskopfes die verdeckten Hausanschlüsse wieder freifräsen.

Zur Lokalisierung dieser verdeckten Hausanschlüsse wird derzeit die Information über deren aus Plänen bzw. einer vorhergehenden Befahrung bekannten Lage herangezogen und der Roboter bzw. das den Fräskopf tragende Trägerfahrzeug anhand seiner Weggebersensoren im Kanal- bzw. Rohrleitungssystem entsprechend positioniert.

Eine ausreichend genaue und zuverlässige Positionierung des Fräswerkzeuges vor dem verdeckten Hausanschluss bereitet mit dieser gegenwärtigen Technologie allerdings noch erhebliche Probleme. Die Positionsbestimmung allein über die Weggebersensoren einer am Roboter angebrachten Haspel bzw. des Roboters selbst erweisen sich als zu ungenau. Diese Werte können zudem durch den Schlupf des Roboterantriebs verfälscht werden. Fehlbohrungen und damit kostenaufwendige Beschädigung des eingezogenen Inliner-Rohres sowie des darunter liegenden Kanalrohres sind daher nicht selten die Folge. Weiterhin können bei dieser Art der Positionierung Bedienfehler durch den Operator auftreten, der den Roboter von außerhalb des Kanal- und Rohrleitungssystems steuert.

Aus der DE 19600085 A1 ist ein Verfahren zur Detektion von Löchern in einem Rohr bekannt, bei dem ein Radargerät im Innern des Rohres entlang dessen Längsachse bewegt wird und quer zur Bewegungsrichtung Sendesignale aussendet und reflektierte Signale empfängt. Durch eine anschließende Auswertung der Reflexionssignale können Löcher, wie beispielsweise Hausanschlüsse, auch nach Einziehen eines Inliner-Rohres lokalisiert werden. Diese direkte Erkennung von Löchern im Rohr ist jedoch aufgrund des komplexen Signalverlaufs der empfangenden Signale sehr aufwendig und fehleranfällig. Weiterhin lassen sich mit dieser Technik auch nicht beliebig vorgebbare Stellen im Rohrleitungssystem auffinden.

Aus der DE 195 21 895 A ist ein vergleichbares Verfahren zum Wiederauffinden von vorgebbaren Stellen in Kanal- und Rohrleitungssystemen nach dem Aufbringen oder Ablagern einer Materialschicht bekannt, bei dem ein Trägerfahrzeug mit einem Mikrowellensensor eingesetzt wird, der Mikrowellensignale aussendet und rückgestreute Mikrowellensignale empfängt.
Auch dieses Verfahren weist die oben angeführten Nachteile auf.

Die Aufgabe der vorliegenden Erfindung besteht darin, ein Verfahren zum Wiederauffinden verdeckter Hausanschlüsse oder sonstiger Stellen in Kanal- und Rohrleitungssystemen anzugeben, das eine hohe Zuverlässigkeit und Genauigkeit bietet.

### Darstellung der Erfindung

Die Aufgabe wird mit dem Verfahren gemäß Anspruch 1 gelöst. Vorteilhafte Ausgestaltungen des Verfahrens sind Gegenstand der Unteransprüche.

Bei dem vorliegenden Verfahren wird ein Trägerfahrzeug mit einem Mikrowellensensor eingesetzt, der Mikrowellensignale aussendet und rückgestreute Mikrowellensignale empfängt, beispielsweise ein Mikrowellenrückstreusensor (MRS), wie er zur Inspektion von Kanalund Rohrleitungssystemen aus der DE 4340059 C2 bekannt ist. Selbstverständlich kann jedoch auch jeder andere Mikrowellensensor eingesetzt werden. Als Trägerfahrzeug ist in der vorliegenden Anmeldung jede Art von Fortbewegungsmittel in einem Kanal- oder Rohrleitungssystem zu verstehen, beispielsweise auch auf pneumatischer Fortbewegungstechnik basierende Rohrmolche.
Zunächst wird - vor dem Aufbringen oder Ablagern der Materialschicht - eine erste Fahrt innerhalb des Kanal- bzw. Rohrleitungssystems mit dem Trägerfahrzeug durchgeführt, bei der die aufzufindenden Stellen mittels eines bildgebenden Systems erkannt werden, wobei zumindest in einem Abschnitt des Kanal- bzw. Rohrleitungssystems während der Fahrt ein erster zeitlicher Signalverlauf der rückgestreuten Mikrowellensignale, vorzugsweise Amplitude und relative Phase, aufgezeichnet und die aufzufindenden Stellen, wie beispielsweise Hausanschlüsse oder bestimmte Markierungen auf der Rohrinnenwandung, im ersten Signalverlauf gekennzeichnet werden. Die Aufzeichnung erfolgt hierbei vorzugsweise durch Übermittlung der erfassten Rückstreusignale an eine außerhalb des Kanal- bzw. Rohrleitungssystems befindliche Datenverarbeitungsstation, an der ein Operator sitzt, der das Trägerfahrzeug von dieser Station aus fernsteuert. Die Übermittlung kann hierbei über ein Kabel in Echtzeit erfolgen.
Es ist nicht erforderlich, die Rückstreusignale entlang des gesamten Kanal- bzw. Rohrleitungssystems aufzuzeichnen. Vielmehr genügt die Aufzeichnung in einem Abschnitt, in dem sich die interessierenden bzw. aufzufindenden Stellen befinden. Die Kennzeichnung im Signalverlauf erfolgt vorzugsweise dadurch, dass der Operator während der Übermittlung der Daten eine entsprechende Taste drückt, sobald sich das Trägerfahrzeug an der entsprechenden Position befindet und gegebenenfalls der korrekte Rollwinkel des auf dem Trägerfahrzeug befindlichen Aufbaus mit dem Mikrowellensensor eingestellt ist. Alternativ dazu kann die Kennzeichnung automatisch oder halbautomatisch unter Verwendung eines Referenz-Messsystems erfolgen. Die aufgezeichneten Daten werden gespeichert.

Nach dem Aufbringen oder Ablagern der Materialschicht wird schließlich eine zweite Fahrt mit dem Trägerfahrzeug durchgeführt, wobei während der Fahrt - wiederum im entsprechenden interessierenden Abschnittein zweiter zeitlicher Signalverlauf der rückgestreuten Mikrowellensignale erfasst wird. Dieser zweite Signalverlauf wird während der Fahrt ständig mit dem ersten gespeicherten Signalverlauf verglichen und die aktuelle Position des Trägerfahrzeugs im Kanal- bzw. Rohrleitungssystem relativ zu den aufzufindenden Stellen aus diesem Vergleich bestimmt.

Das erfindungsgemäße Verfahren basiert auf der Erkenntnis, dass der bei einer Inspektionsfahrt des Trägerfahrzeuges bzw. Roboters entlang des Rohres oder Kanals gemessene Verlauf der rückgestreuten Mikrowellensignale, bezüglich der Amplitude und der Phase, sowohl an Hausanschlüssen wie auch im sonstigen Rohroder Kanalverlauf ein charakteristisches Signalmuster aufweist, das auch nach Einziehen von Inliner-Rohren oder Ablagern von Rückständen im Rohr trotz gewisser Änderungen klar identifiziert werden kann. Besondere Vorteile bietet hierbei der Einsatz geeigneter Auswerteverfahren, beispielsweise Korrelations- oder Fuzzy-Methoden.
Dies ermöglicht ein sicheres Wiederauffinden und eine ausreichend genaue Lokalisierung von Hausanschlüssen oder anderen Stellen, die durch Inliner-Rohre oder Ablagerungen verdeckt werden. Durch das charakteristische Signalmuster, das auch nach dem Aufbringen oder Ablagern einer Materialschicht noch erkennbar ist, kann eine unterschiedliche Streckung der Zeit- oder Wegachse im Signalverlauf, die beispielsweise durch unterschiedliche Fahrgeschwindigkeiten oder Schlupf bei der ersten und zweiten Fahrt entstehen kann, jederzeit wieder korrigiert werden. Das charakteristische Signalmuster ist unabhängig von der Genauigkeit eingesetzter Weggeber oder Antriebskonzepte und liefert jederzeit die exakte Information zum Wiederauffinden der verdeckten Stellen.

Das Trägerfahrzeug ist mit einem bildgebenden System ausgerüstet, das in Echtzeit Aufnahmen des Inneren des Kanal- bzw. Rohrleitungssystems an eine außerhalb des Kanal- bzw. Rohrleitungssystems befindliche Empfangsstation übermittelt, an der der Operator anhand der übermittelten Aufnahmen die aufzufindenden Stellen erkennt und im Signalverlauf kennzeichnet. Als bildgebendes System bietet sich insbesondere eine TV-Kamera an, wie sie bereits auf bekannten Rohrinspektionsfahrzeugen angebracht ist. Selbstverständlich lassen sich jedoch auch andere, beispielsweise auf Ultraschalltechnik basierende bildgebende Systeme einsetzen, solange der Operator auf den übermittelten Aufnahmen die aufzufindenden Stellen erkennen kann.

Im Folgenden werden verschiedene Möglichkeiten zur Durchführung des erfindungsgemäßen Verfahrens zum Wiederauffinden verdeckter Hausanschlüsse erläutert. Es versteht sich jedoch von selbst, dass dem Fachmann auch andere als die dargestellten Alternativen zur Verfügung stehen.
Zur ausreichend genauen Lokalisierung der verdeckten Hausanschlüsse bzw. nachfolgenden Positionierung des Fräswerkzeuges sind zwei aufeinanderfolgende Fahrten erforderlich. Die erste Fahrt, im Folgenden als Referenzfahrt bezeichnet, erfolgt vor dem Einziehen der Inliner-Rohre und dient der exakten Positionsvermessung der unverdeckten Hausanschlüsse unter Verwendung der Weggeber des Roboters. Die zweite Fahrt, im Folgenden als Detektionsfahrt bezeichnet, erfolgt nach dem Einziehen der Inliner-Rohre. Während dieser Fahrt wird wiederum der Signalverlauf der rückgestreuten Mikrowellensignale aufgenommen. Durch intelligenten Vergleich mittels geeigneter Methoden, wie beispielsweise bekannten Korrelationstechniken, des aktuell gemessenen Signalverlaufes mit dem bei der Referenzfahrt aufgezeichneten und gespeicherten Signalverlaufs lassen sich Abweichungen des Fahrweggebers gegenüber der ersten Fahrt korrigieren. Die gespeicherte Position und Orientierung des verdeckten Hausanschlusses lässt sich damit relativ genau lokalisieren.

Für die Referenzfahrt bieten sich zwei Vorgehensweisen an:
1. Bei der operatorgesteuerten Referenzierung fährt der Operator bei der Referenzfahrt alle Hausanschlüsse einzeln an und markiert in der Aufzeichnung, beispielsweise durch Drücken einer Taste, dass sich z.B. die Kamera genau an der Hausanschluss-Position befindet. Der Rollwinkel kann ebenfalls entweder mit der Kamera direkt angefahren oder per Hand eingegeben werden.
2. Bei der sensorgesteuerten Referenzierung wird ein Inspektionsfahrzeug beispielsweise mit einem zusätzlichen Lichtschnittsensor(LSS)-Modul eingesetzt. Mit Hilfe des LSS-Moduls lassen sich optische 3D-Informationen des Rohrinneren gewinnen. Der Operator fährt bei der Referenzfahrt langsam die Haltung mit den Hausanschlüssen ab. Die Kamera kann hierbei geradeaus gerichtet sein. Die LSS-Auswertung ermittelt automatisch die Positionen der Hausanschlüsse, zeigt sie an und lässt sie sich gegebenenfalls vom Operator quittieren. Ein MRS-Programm übernimmt diese bestätigten Hausanschluss-Positionen (Weg und Rollwinkel).
   Bei beiden Optionen wird während der Geradeausfahrt der Signalverlauf des Mikrowellensensors über dem Weg-Rollwinkelverlauf des Roboters aufgezeichnet. Bei der Detektionsfahrt zeigt das MRS-Auswerteprogramm - evtl. nach einer Vorbeifahrt - an, wieweit die Kamera vom nächsten Hausanschluss entfernt ist und unter welchem Rollwinkel sich dieser befindet.

Je nach Roboterausrüstung kann unmittelbar nach der genauen Lokalisierung während der Detektionsfahrt der Fräsvorgang eingeleitet werden, beispielsweise durch 180-Grad-Schwenk einer Revolverachse, an der der Fräskopf und die Kamera angebracht sind. Ebenso ist es möglich, nach Beendigung der Detektionsfahrt nur eine Markierung, z.B. eine Farbmarkierung, für einen später zu vollziehenden Fräsvorgang vorzunehmen.

### Wege zur Ausführung der Erfindung

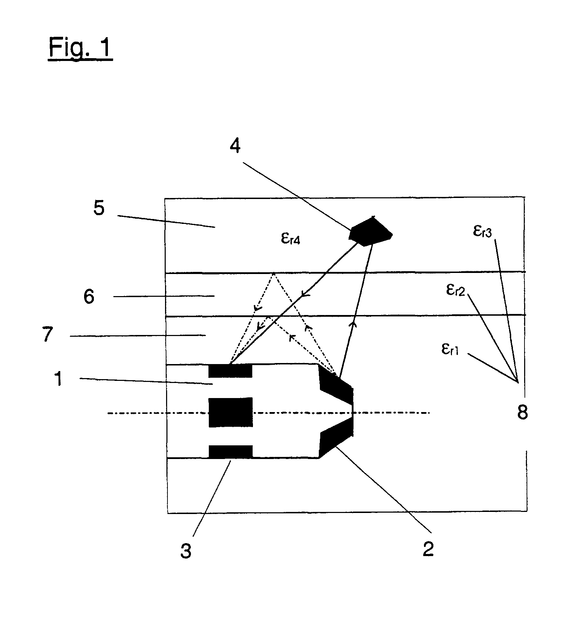

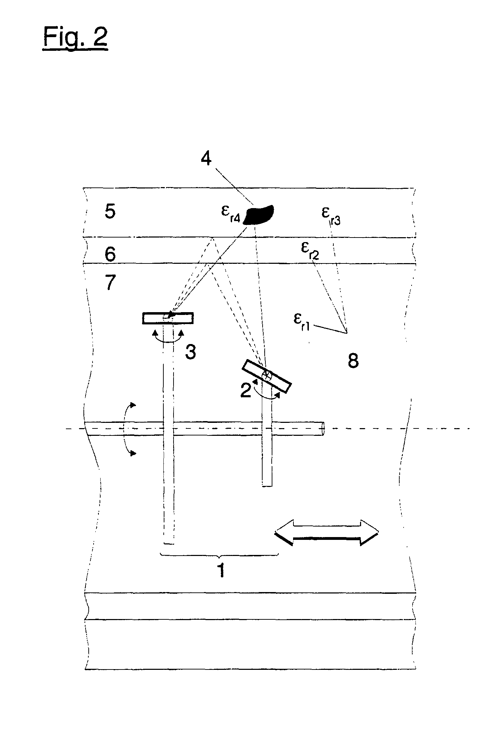

Zur technischen Realisierung des vorliegenden Verfahrens wird in diesem Beispiel ein kommerziell erhältlicher Inspektionsroboter eingesetzt, der mit einem MRS-Modul 1 bestückt wird, wie es beispielsweise in Figur 1 in einem Kanal 7 dargestellt ist. Das MRS-Modul 1 ist hierbei mit 4 Sendeantennen 2 sowie 4 Empfangsantennen 3 ausgestattet, die über den gesamten Umfang des Inspektionsroboters gleich verteilt angeordnet sind. Sende- und Empfangsantennen 2, 3 sind in Längsrichtung des Inspektionsroboters zueinander versetzt angeordnet, wobei die Achsen der Richtcharakteristik der Sendeantennen 2 unter einem Winkel von ca. 45-60° zur Längsachse des Inspektionsroboters ausgerichtet sind, während die Achsen der Richtcharakteristik der Empfangsantennen 3 senkrecht zu dieser Längsachse verlaufen. Durch eine derartige Anordnung werden unerwünschte Reflexionssignale von der Rohrwandung 6 weitgehend unterdrückt, so dass die Rückstreusignale mit höherer Empfindlichkeit erfasst werden können. Figur 1 zeigt hierbei beispielhaft ausgesendete und an einem Objekt 4 am Rohrgrund 5 reflektierte Signale in schematischer Darstellung.
In einer alternativen Ausführungsform, wie sie in Figur 2 dargestellt ist, kann auch nur eine schwenkbare Sendeantenne 2 und eine schwenkbare Empfangsantenne 3 vorgesehen sein, die um die Rohrachse gedreht werden.

Der Inspektionsroboter setzt sich aus einem Trägerfahrzeug zusammen, auf dem neben dem MRS-Modul eine TV-Kamera angeordnet ist. Das Trägerfahrzeug ist über ein Schleppkabel mit einem außerhalb des Rohres befindlichen PC-Leitstand verbunden, an dem ein Operator sitzt, der das Inspektionsfahrzeug und die darauf befindliche Kamera steuert. Das Schleppkabel dient zum einen der Energieversorgung des Fahrzeugs, zum anderen der Übertragung der Steuersignale zum Fahrzeug sowie der Kamera- und Sensorsignale vom Fahrzeug. Bei längeren Rohrstrecken mit schlüpfrigem Untergrund kann die Fahrzeugbewegung über eine zusätzlich vorgesehene kraftgeregelte Seilwinde, eine Haspel, unterstützt werden.

Die Datenkommunikation mit dem PC erfolgt über eine standardmäßige serielle Kommunikationsstrecke mit 19,2 Kbaud. Da die mit dem MRS-Modul erfassten Datenmengen bei einer schnellen Inspektionsfahrt für eine Echtzeitübertragung über diese serielle Verbindung zu groß sind, werden die MRS-Signale im MRS-Modul jeweils über eine Zeit von z.B. 100 s (ca. 1 MByte) gespeichert. Dies entspricht bei einer Fahrgeschwindigkeit des Trägerfahrzeugs von 3m/min einer Inspektionsstrecke von 5 m. Bei Bedarf werden die Daten anschließend über diese Kommunikationsstrecke zum PC-Leitstand übertragen. Das Fahrzeug kann in dieser Zeit stehen bleiben, z.B. nach der Vorbeifahrt am Hausanschluss. Die Detektionsfahrt wird im interessierenden Kanalabschnitt vorzugsweise mit geringerer Geschwindigkeit durchgeführt, so dass die Daten dieses Abschnitts in Echtzeit übertragen werden können. Die Digitalisierung und gegebenenfalls Zwischenspeicherung der MRS-Daten erfolgt auf dem Inspektionsroboter, die Speicherung und Auswertung der Daten auf dem Leit-PC.
Selbstverständlich kann die Übertragung der Daten auch über andere, insbesondere schnellere, Verbindungen erfolgen, so dass auch bei schneller Fahrgeschwindigkeit eine Übertragung in Echtzeit realisierbar ist.

Bei der Durchführung des Verfahrens führt der Operator zunächst vor dem Einziehen der Inliner-Rohre eine Referenzfahrt mit dem Inspektionssystem durch. Bei dieser Referenzfahrt fährt er alle Hausanschlüsse (einzeln) an. Während der gesamten Fahrt werden vom MRS-Modul die Rückstreusignale der ausgesendeten Mikrowellen erfasst. Die Amplitude und Phase (relativ zur den ausgesendeten CW-Mikrowellensignalen) der empfangenen Signale werden hierbei in Abhängigkeit vom Weg-Rollwinkelverlauf des Inspektionfahrzeugs detektiert. Diese Weginformation steht dem System über den Weggeber am Inspektionsfahrzeug zur Verfügung. Die Steuerung im Fahrzeug gibt hierfür über ein Start-Signal (Reset) und einen Weg- bzw. Zeit-Takt dem MRS-Modul die für die Daten-Pufferung benötigten Weg-Marken.

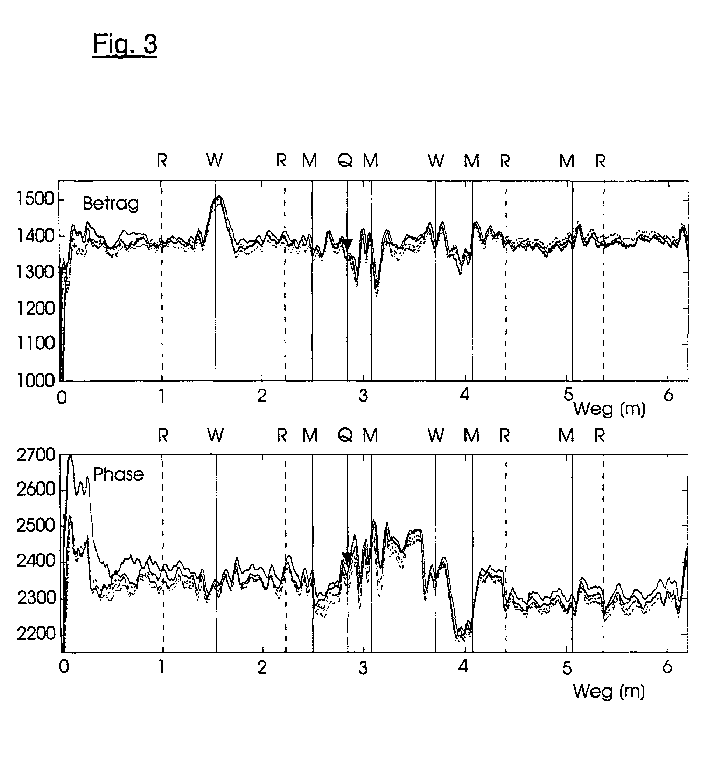

Die Figur 3 zeigt hierbei beispielhaft einen Signalverlauf der Amplitude (untere Abbildung) und der Phase (obere Abbildung) der rückgestreuten Mikrowellensignale in Abhängigkeit vom zurückgelegten Weg und dessen Reproduzierbarkeit (in der Figur bei 5 identischen Messfahrten in einem Rohr). Die Position eines Hausanschlusses ist durch den Pfeil markiert. In der Figur ist sehr gut der charakteristische Verlauf der Signale zu erkennen, anhand derer bei der Detektionsfahrt die Position des Hausanschlusses aufgefunden werden kann.

Der Operator findet die Position der Hausanschlüsse über die von der Kamera gelieferten Bilder. Er stellt die Kamera z.B. senkrecht zur Rohrachse und zentriert sie mit dem Fahrzeug und der Rollwinkel-Einstellung in Bezug zum Hausanschluss. Hat er diese Position eingenommen, teilt er dem MRS-Auswerteprogramm mit, dass sich die Kamera genau an der Hausanschluss-Position befindet. Diese Position kann hierdurch einer Messposition auf der Wegachse bzw. im Weg-Rollwinkelverlauf der erfassten Mikrowellendaten zugeordnet werden.

Nach Aufzeichnung dieser Daten kann das Inliner-Rohr eingezogen werden. Anschließend erfolgt die Detektionsfahrt mit dem Inspektionssystem. Auch hierbei wird während der Geradeausfahrt der Signalverlauf des MRS-Sensors über dem Weg-Rollwinkelverlauf des Roboters aufgezeichnet. Die erfassten Daten werden kontinuierlich während der Fahrt dem Leit-PC übermittelt, der den Signalverlauf mit dem vorher aufgezeichneten Verlauf mit Hilfe eines Korrelationsverfahrens vergleicht und auf diese Weise anhand markanter Signalmuster jederzeit die aktuelle Position des Inspektionsfahrzeugs relativ zum nächsten Hausanschluss erkennt, unabhängig davon ob der Weggeber exakt arbeitet oder aufgrund von Schlupf große Unsicherheiten aufweist. Eine eventuelle Streckung oder Stauchung des Signalverlaufs durch unterschiedlichen Schlupf wird hierbei ausgeglichen. Bei Erreichen des anhand des Signalverlaufs erkannten verdeckten Hausanschlusses wird dieser im Innenrohr durch ein auf dem Roboter vorgesehenes Markierungsmittel farblich markiert und die Fahrt fortgesetzt. Im Anschluss an die Markierung der Anschlüsse kann dann ein Roboterfahrzeug mit einem Fräskopf und TV-Kamera in das Rohr einfahren und die Hausanschlüsse an den markierten Stellen freilegen.
Mit dem erfindungsgemäßen Verfahren lassen sich verdeckte Hausanschlussrohre (DN 100 bis 200) in Kanalrohren (DN 300 bis 500) exakt und zuverlässig detektieren bzw. wieder finden. Optional können durch Einsatz eines LSS-Sensors Formabweichungen, beispielsweise Verwölbungen des Inliners über dem Hausanschluss im Kanalrohr erkannt und als weiteres Indiz für einen verdeckten Hausanschluss herangezogen werden.

### Bezugszeichenliste

- 1: Mikrowellenrückstreusensor
- 2: Sendeantenne(n)
- 3: Empfangsantenne(n)
- 4: Objekt
- 5: Rohrgrund
- 6: Rohrwand
- 7: Kanal
- 8: Dielektrische Struktur der Kanalumgebung

## Patentansprüche

1. Verfahren zum Wiederauffinden von vorgebbaren Stellen in Kanal- und Rohrleitungssystemen nach dem Aufbringen oder Ablagern einer Materialschicht, bei dem ein Trägerfahrzeug mit einem Mikrowellensensor (1) eingesetzt wird, der Mikrowellensignale aussendet und rückgestreute Mikrowellensignale empfängt,
**gekennzeichnet durch** folgende Schritte:
- Durchführen einer ersten Fahrt innerhalb des Kanal- bzw. Rohrleitungssystems (7) mit dem Trägerfahrzeug vor dem Aufbringen oder Ablagern der Materialschicht, bei der die aufzufindenden Stellen mittels eines bildgebenden Systems erkannt werden, wobei zumindest in einem Abschnitt des Kanal- bzw. Rohrleitungssystems (7) während der Fahrt ein erster zeitlicher Signalverlauf der rückgestreuten Mikrowellensignale aufgezeichnet und die aufzufindenden Stellen im ersten Signalverlauf gekennzeichnet werden; und
- Durchführen einer zweiten Fahrt mit dem Trägerfahrzeug nach dem Aufbringen oder Ablagern der Materialschicht, wobei während der Fahrt ein zweiter zeitlicher Signalverlauf der rückgestreuten Mikrowellensignale erfasst und **durch** Vergleich mit dem ersten Signalverlauf die aktuelle Position des Trägerfahrzeugs im Kanal- bzw. Rohrleitungssystem (7) relativ zu den aufzufindenden Stellen bestimmt wird.

2. Verfahren nach Anspruch 1,
**dadurch gekennzeichnet,**
**dass** der erste und der zweite Signalverlauf Amplitude und Phase des rückgestreuten Mikrowellensignales umfassen.

3. Verfahren nach Anspruch 1 oder 2,
**dadurch gekennzeichnet,**
**dass** als Mikrowellensensor (1) ein Mikrowellenrückstreusensor eingesetzt wird

4. Verfahren nach einem der Ansprüche 1 bis 3,
**dadurch gekennzeichnet,**
**dass** die Mikrowellensignale amplitudenmoduliert werden.

5. Verfahren nach einem der Ansprüche 1 oder 2,
**dadurch gekennzeichnet,**
**dass** als Mikrowellensensor (1) ein Radarsensor eingesetzt wird, der vorzugsweise im FM-CW- oder Puls-Radarbetrieb arbeitet.

6. Verfahren nach einem der Ansprüche 1 bis 5,
**dadurch gekennzeichnet,**
**dass** das bildgebende System eine Kamera gegebenenfalls mit einem zusätzlichen Lichtschnittsensor ist.

7. Verfahren nach einem der Ansprüche 1 bis 6,
**dadurch gekennzeichnet,**
**dass** der Vergleich mit einem Korrelationsverfahren durchgeführt wird.

8. Verfahren nach einem der Ansprüche 1 bis 7,
**dadurch gekennzeichnet,**
**dass** der erste und der zweite zeitliche Signalverlauf auf einen Weg-Rollwinkelverlauf des Trägerfahrzeugs bzw. des Mikrowellensensors (1) auf dem Trägerfahrzeug normiert werden.

9. Verfahren nach Anspruch 8,
**dadurch gekennzeichnet,**
**dass** der Weg aus einem Weggebersignal des Trägerfahrzeugs oder einer mit diesem über ein Kabel verbundenen Kabeltrommel bestimmt wird.

## Claims

1. A method for retrieving predetermined locations in sewer and pipeline systems after the application or the deposition of a layer of material, in which a carrier vehicle having a microwave sensor (1) is used which emits microwave signals and receives backscattered microwave signals,
**characterized by** having the following steps:
- conduction of a first run inside said sewer respectively said pipeline system (7) with said carrier vehicle before said application or said deposition of said layer of material in which said sought locations are detected by means of an imaging system, with in at least one section of said sewer respectively pipeline system (7) a first temporal signal profile of said backscattered microwave signals being recorded and the sought locations being marked in said first signal profile ; and
- conduction of a second run with said carrier vehicle after said application or said deposition of said layer of material, with a second temporal signal profile of said backscattered signals being recorded during said run and the current position of said carrier vehicle in said sewer respectively said pipeline system (7) relative to said sought locations being determined by comparison with said first signal profile.

2. A method according to claim 1,
wherein said first and said second signal profile include the amplitude and phase of said backscattered microwave signal.

3. A method according to claim 1 or 2,
wherein a microwave backscatter sensor (1) is utilized as said microwave sensor.

4. A method according to one of the claims 1 to 3,
wherein said microwave signals are amplitude modulated.

5. A method according to one of the claims 1 or 2,
wherein a radar sensor, which preferably runs in FM-CW or pulse radar operation, is utilized as said microwave sensor (1).

6. A method according to one of the claims 1 to 5,
wherein said imaging system is a camera, if required, with an additional light section sensor.

7. A method according to one of the claims 1 to 6,
wherein said comparison is carried out using a correlation method.

8. A method according to one of the claims 1 to 7,
wherein said first and said second temporal signal profile are normed on a path-roll-angle profile of said carrier vehicle respectively of said microwave sensor (1) on said carrier vehicle.

9. A method according to claim 8,
wherein the path is determined from a path-giver signal of said carrier vehicle or via a cable drum connected with it by a cable.

## Revendications

1. Procédé à retrouver des positions dans des systèmes d'égouts ou de tuyauterie suivant le dépôt ou l'application d'une couche de matériau, dans lequel un véhicule porteur à un détecteur (1) de microondes est utilisé, qui émet des signaux de microondes et reçoit des signaux de microondes rétro diffusées,
**caractérisé par** les opérations suivantes:
- réaliser un premier parcours à l'intérieur dudit système d'égouts ou de tuyauterie (7) moyennant ledit véhicule porteur avant le dépôt ou l'application de ladite couche de matériau, au cours duquel les positions à retrouver sont reconnues moyennant un système de formation d'images, dans lequel une première loi des signaux de microondes en fonction du temps est enregistrée dans au moins un tronçon dudit système d'égouts ou de tuyauterie au cours du parcours et les positions à retrouver sont marquées dans la première loi des signaux; et
- réaliser un deuxième parcours moyennant ledit véhicule porteur suivant le dépôt ou l'application de ladite couche de matériau, à une deuxième loi en fonction du temps des signaux de microondes rétro diffusées est détectée au cours du parcours et à détermination de la position actuelle dudit véhicule porteur dans ledit système d'égouts ou de tuyauterie (7) par comparaison avec ladite première loi des signaux.

2. Procédé selon la revendication 1,
**caractérisé en ce**
**que** ladite première loi des signaux et ladite deuxième loi des signaux comprennent l'amplitude et la phase du signal des microondes rétro diffusées.

3. Procédé selon la revendication 1 ou 2,
**caractérisé en ce**
**qu'**un détecteur à rétro diffusion des microondes est utilisé en tant que ledit détecteur de microondes.

4. Procédé selon une quelconque des revendications 1 à 3,
**caractérisé en ce**
**que** les signaux de microondes sont modulés en amplitude.

5. Procédé selon une quelconque des revendications 1 ou 2,
**caractérisé en ce**
**qu'**un détecteur radar est utilisé en tant que ledit détecteur (1) de microondes, qui fonctionne, de préférence, en régime à M.F. à ondes entretenues ou en régime à radar pulsé.

6. Procédé selon une quelconque des revendications 1 à 5,
**caractérisé en ce**
**que** ledit système de formation d'images est une caméra, éventuellement à un détecteur à coupe optique supplémentaire.

7. Procédé selon une quelconque des revendications 1 à 6,
**caractérisé en ce**
**que** la comparaison se fait moyennant une technique de corrélation.

8. Procédé selon une quelconque des revendications 1 à 7,
**caractérisé en ce**
**que** ladite première loi des signaux en fonction du temps et ladite deuxième loi des signaux en fonction du temps sont standardisés à une loi de l'angle du parcours et de roulis dudit véhicule porteur ou dudit détecteur de microondes (1) sur ledit véhicule porteur.

9. Procédé selon la revendication 8,
**caractérisé en ce**
**que** le trajet est déterminé en le dérivant dudit signal du transmetteur de parcours dudit véhicule porteur ou d'un tambour de câble relié via un câble audit véhicule.
